# EUROPEAN PATENT APPLICATION

(11) **EP 2 980 455 A1**
(43) Date of publication of application: **03.02.2016**
(21) Application number: 14775636.5
(22) Date of filing: 04.02.2014
(51) Int. Cl.: F16H 61/02, F16H 59/68, F16H 61/662

(54) **CONTINUOUSLY VARIABLE TRANSMISSION CONTROL DEVICE AND CONTROL METHOD**

(30) Priority: 25.03.2013 JP 2013062509
(71) Applicant: Jatco Ltd, Fuji-shi, Shizuoka 417-8585 (JP)
(72) Inventor: MIYAKE, Masao, Fuji-shi Shizuoka 417-8585 (JP); YOSHIKAWA, Yasuaki, Fuji-shi Shizuoka 417-8585 (JP); YAMAGUCHI, Midori, Fuji-shi Shizuoka 417-8585 (JP); KATOU, Takeshi, Fuji-shi Shizuoka 417-8585 (JP); SUZUKI, Takayuki, Fuji-shi Shizuoka 417-8585 (JP)
(74) Representative: Hoefer & Partner Patentanwälte mbB
(86) International application number: PCT/JP2014/052552
(87) International publication number: WO 2014/156309

(57) **Abstract**

In a control apparatus for a continuously variable transmission that is installed in a vehicle and comprises a continuously variable transmission mechanism, a speed ratio of the continuously variable transmission mechanism being modified by modifying a winding radius of a belt sandwiched between pulleys in accordance with an oil pressure supplied to hydraulic cylinders provided on the pulleys, the control apparatus comprises an oil pressure supply unit that supplies a working oil at a predetermined oil pressure, a flow rate control unit that controls a flow rate at which the working oil supplied by the oil pressure supply unit is supplied to the hydraulic cylinder, and flow rate setting part that sets a target oil pressure to be supplied to the hydraulic cylinder, and sets a flow rate at which the working oil is to be caused to flow through the flow rate control unit in order to achieve the target oil pressure.

## Description

### TECHNICAL FIELD

This invention relates to a control apparatus for a continuously variable transmission formed by winding a belt or a chain around a set of pulleys.

### BACKGROUND ART

A conventional continuously variable transmission formed by winding a belt or a chain around a set of pulleys so that a shift is performed by modifying a groove width of a primary pulley and a secondary pulley is in general use. The pulleys are constituted by a fixed pulley and a movable pulley, and a hydraulic cylinder is provided on the movable pulley so that the groove width between the fixed pulley and the movable pulley is modified by modifying an oil pressure in the hydraulic cylinder.

An oil pressure regulated by a hydraulic control apparatus is supplied to respective hydraulic cylinders of the primary pulley and the secondary pulley. The hydraulic control apparatus controls the oil pressure supplied to the respective hydraulic cylinders using an oil pressure generated by a hydraulic pump as a source pressure.

JP2008-2483A discloses, as a control apparatus for this type of continuously variable transmission, a hydraulic control apparatus for a belt type continuously variable transmission in which a pressure regulator valve regulates a discharge pressure of an oil pump to a line pressure on the basis of a control signal, a primary regulator valve regulates the line pressure to a primary pressure on the basis of a control signal, and a linear solenoid regulates the line pressure to a secondary pressure on the basis of a control signal.

### SUMMARY OF INVENTION

In the conventional technique described in JP2008-2483A, instead of controlling the primary pressure or the secondary pressure from the line pressure using a solenoid, the oil pressure is controlled by regulating a pilot pressure from the line pressure and operating a hydraulic control valve using the pilot pressure (the oil pressure), i.e. without using a solenoid.

With this type of configuration, two control valves are required to control a single oil pressure (the primary pressure or the secondary pressure), leading to an increase in a number of components and corresponding increases in cost and size.

The number of components may be reduced by controlling the oil pressure with a single control valve using a solenoid. The control valve controls the oil pressure by activating the solenoid, and includes a feedback mechanism through which an actual oil pressure circulates. With this configuration, when the line pressure serving as the source pressure is large, the valve must be operated in opposition to the large oil pressure and a large feedback pressure, and therefore both the solenoid and the transmission must be increased in size.

This invention has been designed in consideration of these problems, and an object thereof is to provide a control apparatus for a continuously variable transmission, which can control a speed ratio of the continuously variable transmission without being increased in size.

According to one aspect of this invention, a control apparatus for a continuously variable transmission that is installed in a vehicle and comprises a continuously variable transmission mechanism, a speed ratio of the continuously variable transmission mechanism being modified by modifying a winding radius of a belt sandwiched between pulleys in accordance with an oil pressure supplied to hydraulic cylinders provided on the pulleys, the control apparatus comprises an oil pressure supply unit that supplies a working oil at a predetermined oil pressure, a flow rate control unit that controls a flow rate at which the working oil supplied by the oil pressure supply unit is supplied to the hydraulic cylinder, and flow rate setting part that sets a target oil pressure to be supplied to the hydraulic cylinder, and sets a flow rate at which the working oil is to be caused to flow through the flow rate control unit in order to achieve the target oil pressure.

According to another aspect of this invention, a control method for controlling a continuously variable transmission installed in a vehicle, a speed ratio of the continuously variable transmission being modified by modifying a winding radius of a belt sandwiched between a set of pulleys in accordance with an oil pressure supplied to at least one of a set of hydraulic cylinders provided on the set of pulleys, using a control apparatus comprising an oil pressure supply unit that supplies a working oil at a predetermined oil pressure and a flow rate control unit that controls a flow rate at which the working oil supplied by the oil pressure supply unit is supplied to the hydraulic cylinder. The control method comprises setting a target oil pressure to be supplied to the hydraulic cylinder, setting a flow rate at which the working oil is to be caused to flow through the flow rate control unit in order to achieve the target oil pressure, and causing the working oil to flow through the flow rate control unit at the set flow rate.

According to the aspect described above, the target oil pressure of the oil pressure supplied to the hydraulic cylinder is set as a flow rate of the working oil that passes through the flow rate control unit, whereupon the set flow rate is supplied from flow rate control unit to the hydraulic cylinder, so that the flow rate is determined univocally in accordance with the sectional area of the opening portion, and therefore it is merely necessary to set the sectional area and determine an operating amount of the control valve at which to realize the sectional area. According to this configuration, the oil pressure can be supplied to the hydraulic cylinder using the line pressure as a source pressure with a single control valve and the configures of the control valve as like does not increase in size.

### BRIEF DESCRIPTION OF DRAWINGS

FIG. 1 is an illustrative view showing an example of a configuration of a continuously variable transmission (CVT) according to an embodiment of this invention.
FIG. 2 is an illustrative view showing a configuration of a hydraulic control apparatus according to this embodiment of this invention.
FIG. 3 is an illustrative view showing a configuration of a secondary control valve according to this embodiment of this invention.
FIG. 4 is an illustrative view showing function blocks of a controller according to this embodiment of this invention.
FIG. 5 is a flowchart showing control of the secondary control valve, executed by the controller according to this embodiment of this invention.

### DESCRIPTION OF EMBODIMENTS

An embodiment of this invention will be described below with reference to the attached figures.

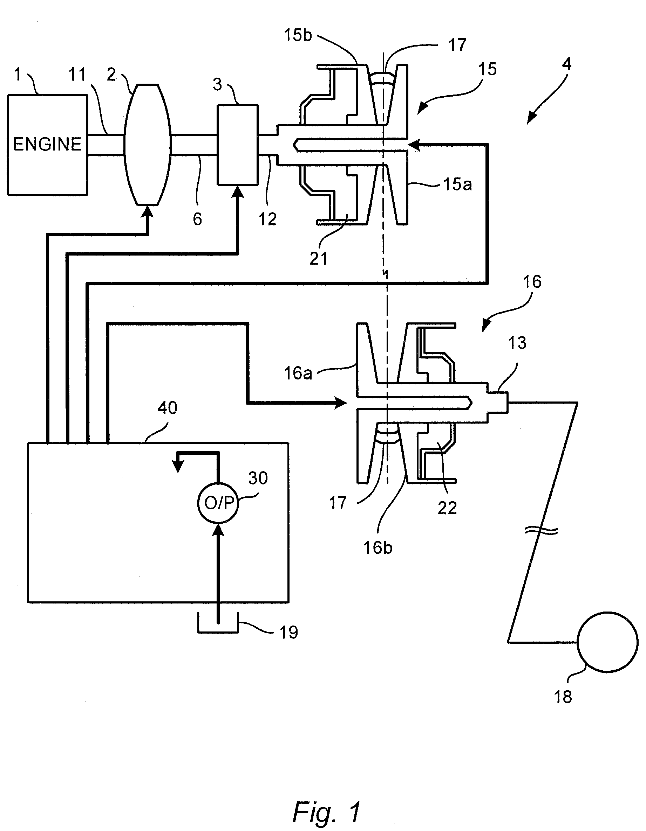

FIG. 1 is an illustrative view showing an example of a configuration of a continuously variable transmission (CVT) according to this embodiment of this invention.

Rotation of a crankshaft 11 that is driven by an engine 1 installed in a vehicle is transmitted to a continuously variable transmission mechanism 4 via a torque converter 2 and a forward-reverse changeover mechanism 3. The continuously variable transmission mechanism 4 changes a speed of the rotation and transmits the speed-changed rotation to a vehicle wheel via a final reduction gear 18. As a result, the vehicle travels forward or in reverse.

The torque converter 2 includes a lock-up clutch, and is controlled by an oil pressure to a converter condition and a lock-up condition (slip lock-up).

The forward-reverse changeover mechanism 3 comprises a forward clutch for transmitting rotation of a turbine shaft 6 serving as an output shaft of the torque converter 2 to the continuously variable transmission mechanism 4 in a positive (forward) direction, and a reverse brake for transmitting the rotation in an opposite (reverse) direction. By engaging and disengaging the forward clutch and the reverse brake to and from each other, the vehicle can be switched between forward and reverse travel, and control can be performed to ensure that a driving force of the engine 1 is not transmitted to the vehicle wheel.

The continuously variable transmission mechanism 4 is a belt type continuously variable transmission mechanism comprising a primary pulley 15 coupled to an input shaft 12 that serves as an output side rotary shaft of the forward-reverse changeover mechanism 3, a secondary pulley 16 coupled to an output shaft 13 that is disposed in parallel with the input shaft 12, and an endless belt (a V belt) 17 wound between the primary pulley 15 and the secondary pulley 16.

The primary pulley 15 comprises a fixed pulley (a fixed sheave) 15a, a movable pulley (a movable sheave) 15b disposed such that a sheave surface thereof opposes the fixed pulley 15a, whereby a V groove is formed between the movable pulley and the fixed pulley, and a hydraulic cylinder 21 provided on the movable pulley 15b in order to displace the movable pulley 15b in an axial direction.

Similarly, the secondary pulley 16 comprises a fixed pulley (a fixed sheave) 16a, a movable pulley (a movable sheave) 16b, and a hydraulic cylinder 22 provided on the movable pulley 16b in order to displace the movable pulley 16b in the axial direction.

When an oil pressure supplied to the respective hydraulic cylinders 21, 22 is adjusted, a width of the V groove varies, leading to variation in a contact radius between the V belt 17 and the respective pulleys 15, 16, and as a result, a speed ratio of the continuously variable transmission mechanism 4 varies continuously.

An output of the continuously variable transmission mechanism 4 is transmitted to the vehicle wheel via the final reduction gear 18 as rotation of the output shaft 13.

An oil pressure regulated by a hydraulic control apparatus 40 is supplied to the hydraulic cylinders 21, 22. The hydraulic control apparatus 40 generates a predetermined line pressure from an oil pressure generated by an oil pump 30, and using the line pressure as a source pressure, respectively controls a primary oil pressure Ppri supplied to the hydraulic cylinder 21 of the primary pulley 15 and a secondary oil pressure Psec supplied to the hydraulic cylinder 22 of the secondary pulley 16.

The oil pressure regulated by the hydraulic control apparatus 40 is supplied to the torque converter 2, the forward-reverse changeover mechanism 3, and so on. An engagement condition of the lock-up clutch of the torque converter 2 and engagement conditions of the forward clutch and reverse brake of the forward-reverse changeover mechanism 3 are controlled by the supplied oil pressure. The oil pressure supplied to the continuously variable transmission mechanism 4 is drained into an oil pan 19 and supplied back to the oil pump 30.

In the continuously variable transmission mechanism 4 thus configured, the oil pressure is conventionally controlled using a following configuration.

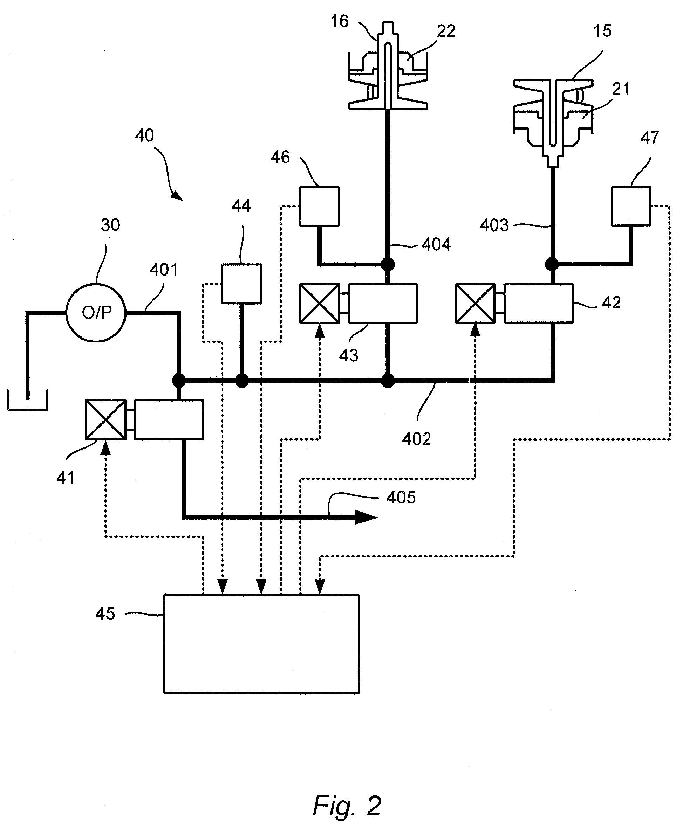

The hydraulic control apparatus 40 comprises a regulator valve 41 (see FIG. 2) that controls the oil pressure generated by the oil pump 30 to a predetermined line pressure PL.

The line pressure is supplied not only to the hydraulic cylinders 21, 22 of the continuously variable transmission mechanism 4 but also to a plurality of friction elements and so on provided in the torque converter 2 and the forward-reverse changeover mechanism 3, and is therefore set at a comparatively large pressure.

The hydraulic control apparatus 40 regulates the oil pressure supplied to the hydraulic cylinders 21, 22 of the continuously variable transmission mechanism 4 using the large line pressure as a source pressure. The oil pressure is regulated by hydraulic control valves corresponding respectively to the primary pulley 15 and the secondary pulley 16.

Incidentally, with a hydraulic control valve, it is mechanistically difficult to regulate the primary pressure or the secondary pressure by controlling (reducing) the line pressure directly using a solenoid.

More specifically, the hydraulic control valve is constituted by a spool, a spring, a solenoid, and so on, and controls the oil pressure by activating the solenoid against a biasing force of the spring so as to modify a position of the spool. The hydraulic control valve further comprises a feedback mechanism through which an actual oil pressure circulates, and therefore, when the line pressure serving as the source pressure is large, the feedback mechanism must be increased in size.

According to this structure, when the line pressure serving as the source pressure is large, a spring force and a solenoid thrust must be increased accordingly. The solenoid must therefore be increased in size in order to control the line pressure directly, and when the solenoid is increased in size, a layout in which to install the solenoid must be enlarged, leading to an increase in the size of the transmission 4.

As a conventional response to this problem, instead of controlling the line pressure directly using a solenoid, the oil pressure is typically controlled by providing a control valve that regulates a pilot pressure, which is a lower pressure than the line pressure, and operating the hydraulic control valve using the pilot pressure instead of a solenoid.

With this configuration, however, at least two hydraulic control valves are required to control a single oil pressure (the secondary pressure Psec, for example), leading to an increase in a number of components. As a result, increases in cost and size are unavoidable.

Hence, in this embodiment of this invention, as will be described below, a single control valve that controls a flow rate of a working oil is used to control a single oil pressure (the secondary pressure Psec, for example).

FIG. 2 is an illustrative view illustrating a configuration of the hydraulic control apparatus 40 according to this embodiment of this invention.

In this embodiment, operations relating to control of the oil pressure supplied to the hydraulic cylinder 22 of the secondary pulley 16 will mainly be described. Operations relating to the primary pulley 15 are similar, and therefore description thereof has been omitted.

The hydraulic control apparatus 40 comprises a regulator valve 41 that controls the oil pressure generated by the oil pump 30 to the predetermined line pressure PL, a secondary control valve 43 that controls the secondary pressure Psec supplied to the hydraulic cylinder 22 of the secondary pulley 16 using the line pressure PL as a source, and a primary control valve 42 that controls the primary pressure Ppri supplied to the hydraulic cylinder 21 of the primary pulley 15 using the line pressure PL as a source.

The hydraulic control apparatus 40 comprises a controller 45 that controls operations of the regulator valve 41, the secondary control valve 43, and the primary control valve 42.

The oil pressure discharged by the oil pump 30 is supplied to the regulator valve 41 through an oil passage 401. The regulator valve 41 regulates the discharge pressure of the oil pump 30 to the predetermined line pressure, and supplies the line pressure to an oil passage 402. The secondary control valve 43 and the primary control valve 42 are provided in the oil passage 402.

The secondary control valve 43 is controlled by control executed by the controller 45 such that an oil passage 404 that communicates with the hydraulic cylinder 22 of the secondary pulley 16 reaches the predetermined secondary pressure Psec. A secondary pressure sensor 46 is provided in the oil passage 404.

Similarly, the primary control valve 42 is controlled by control executed by the controller 45 such that an oil passage 403 that communicates with the hydraulic cylinder 21 of the primary pulley 15 reaches the predetermined primary pressure Ppri. A primary pressure sensor 47 is provided in the oil passage 403. An oil passage 405 that supplies oil pressure to other sites requiring oil pressure, such as the torque converter 2 and the forward-reverse changeover mechanism 3, is connected to the regulator valve 41.

The controller 45 obtains signals from a line pressure sensor 44, the secondary pressure sensor 46, and the primary pressure sensor 47. The controller 45 then controls the regulator valve 41 so that an actual line pressure PLr obtained from the line pressure sensor 44 matches the required predetermined line pressure PL.

The controller 45 determines control signals to be supplied to the secondary control valve 43 and the primary control valve 42 from a target oil pressure Pt, the speed ratio, and so on based on a target speed ratio that is determined on the basis of a vehicle speed, a current speed ratio, an acceleration request from a driver, and so on. The secondary control valve 43 and the primary control valve 42 are operated when the determined control signals (current values for solenoids) are supplied thereto, and as a result, the respective oil pressures thereof are controlled.

The secondary control valve 43 and the primary control valve 42 are constituted by flow control valves that control the flow rate of the working oil passing through. Next, a configuration of the control valves will be described using the secondary control valve 43 as an example.

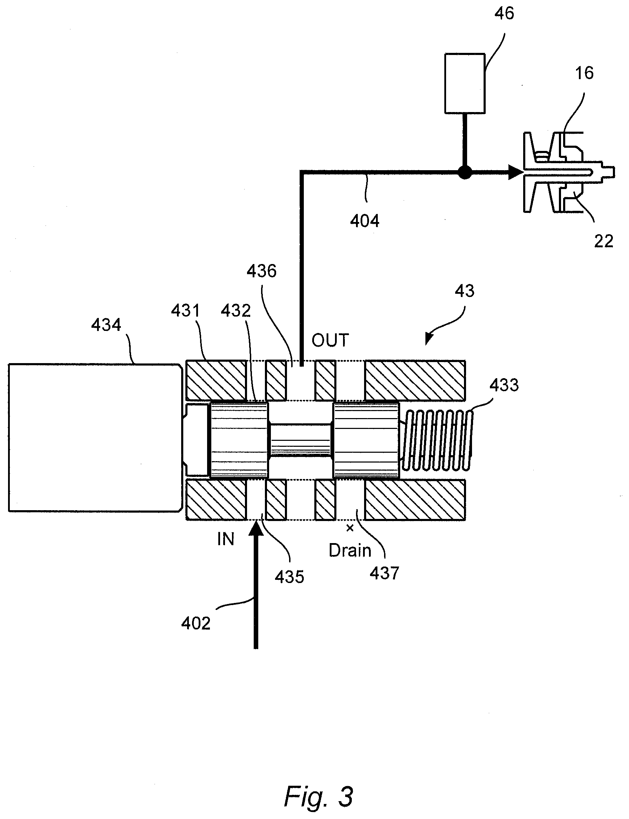

FIG. 3 is an illustrative view showing a configuration of the secondary control valve 43 according to this embodiment of this invention.

The secondary control valve 43 is configured such that a spool 432 is built into a body 431. The spool 432 comprises a solenoid 434 that is biased by a spring 433 so as to be capable of moving the spool 432. The solenoid 434 controls the flow rate of the working oil passing through by moving the spool 432 in an axial direction on the basis of a control signal from the controller 45 so as to modify an opening of the secondary control valve 43. An IN port 435, an OUT port 436, and a drain port 437 are formed in the body 431.

The IN port 435 communicates with the oil passage 402 so that the line pressure PL is supplied thereto. The OUT port 436 communicates with the oil passage 404 so as to communicate with the hydraulic cylinder 22 of the secondary pulley 16. The drain port 437 drains the oil pressure in the oil passage 404.

In the secondary control valve 43, the solenoid 434 is operated upon reception of a control signal (an instructed current i) from the controller 45 so as to cause the spool 432 to move. As a result, the IN port 435 and the OUT port 436 communicate with each other, and a sectional area of an opening portion of a passage formed by the communicating ports varies. The flow rate of the working oil passing through the secondary control valve 43 is determined by this sectional area and the line pressure.

The controller 45 controls the oil pressure supplied to the hydraulic cylinder 22 of the secondary pulley 16 by controlling the secondary control valve 43 through an operation described below.

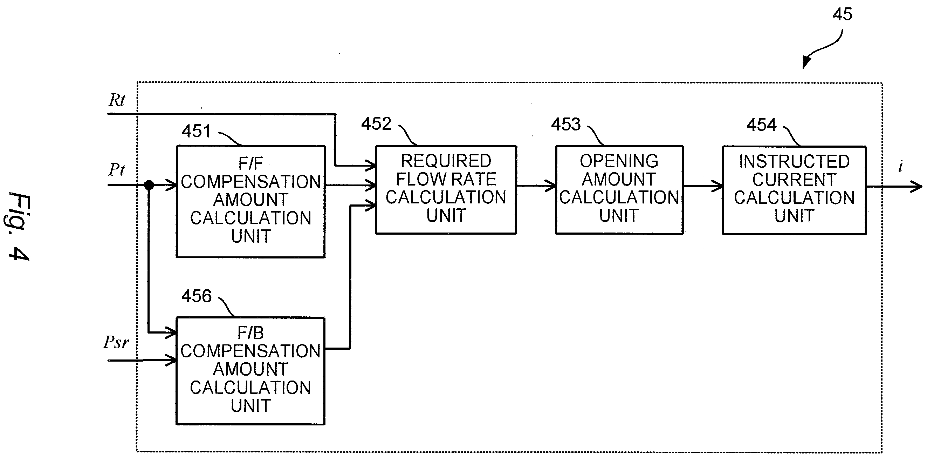

FIG. 4 is an illustrative view showing function blocks of the controller 45 according to this embodiment of this invention.

The controller 45 determines the target oil pressure Pt on the basis of the target speed ratio of the continuously variable transmission mechanism 4, and determines the instructed current i issued to the solenoid 434 of the secondary control valve 43 on the basis of the determined target oil pressure Pt. In the secondary control valve 43, the instructed current i is supplied to the solenoid 434 in order to control the flow rate of the secondary control valve 43, and as a result, an oil pressure corresponding to the target oil pressure is supplied to the hydraulic cylinder 22 of the secondary pulley 16.

The controller 45 comprises a feedforward (F/F) compensation unit 451, a required flow rate calculation unit 452, an opening portion calculation unit 453, an instructed current calculation unit 454, and a feedback (F/B) compensation unit 456.

The feedforward compensation unit 451 calculates a feedforward compensation amount so as to obtain a predetermined response to the input target oil pressure Pt at which disturbances such as noise are canceled out. A first order lag function such as first order differentiation, for example, is used in the feedforward compensation unit 451.

The required flow rate calculation unit 452 calculates a required flow rate Q that must be generated in the secondary control valve 43 in order to realize the target oil pressure Pt. The required flow rate Q is calculated on the basis of a current speed ratio Rt, the feedforward compensation amount, and a feedback compensation amount.

The opening amount calculation unit 453 calculates an opening amount A as a sectional area of the opening portion of the secondary control valve 43 at which the calculated required flow rate Q is generated in the secondary control valve 43. The required flow rate Q, the opening amount A, and the oil pressure (the line pressure) have a correlative relationship, and therefore the opening amount A is determined in relation to the required flow rate Q on the basis of this correlative relationship.

The instructed current calculation unit 454 calculates the instructed current i that is issued to the solenoid 434 of the secondary control valve 43 in order to set the secondary control valve 43 at the calculated opening amount A. The instructed current i is obtained by, for example, determining a stroke amount of the spool 432 corresponding to the opening amount A, and calculating the instructed current i as a current value required to operate the solenoid 434 such that the determined stroke amount is obtained.

The feedback compensation amount calculation unit 456 calculates the feedback compensation amount by performing proportional-integral-derivative control (PID control), for example, on the basis of the target oil pressure Pt and an actual secondary oil pressure Psr detected by the secondary pressure sensor 46.

With this configuration, the controller 45 calculates the required flow rate Q for causing the target oil pressure Pt to act on the hydraulic cylinder 22 via the oil passage 404, and issues the instructed current i to the solenoid 434 in order to obtain the opening amount A at which the flow rate generated in the secondary control valve 43 reaches the instructed flow rate Q.

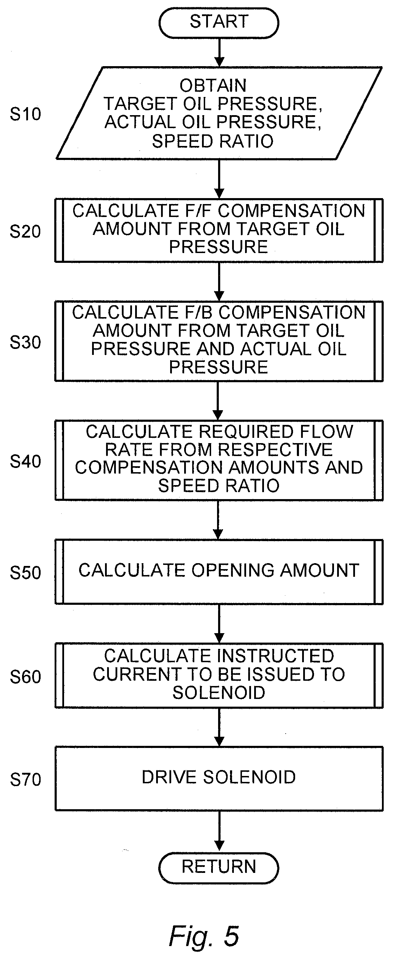

FIG. 5 is a flowchart showing control of the secondary control valve 43, executed by the controller 45.

The flowchart shown in FIG. 5 is executed by the controller 45 at predetermined period intervals (every 10 ms, for example).

When the processing is started, the controller 45 obtains the target oil pressure Pt, the actual secondary oil pressure Psr, and the current speed ratio Rt(S10).

Next, the feedforward compensation amount is calculated by the feedforward compensation amount calculation unit 451 of the controller 45. The feedforward compensation amount is calculated on the basis of the target oil pressure Pt using a first order lag function or the like (S20).

Next, the feedback compensation amount is calculated by the feedback compensation amount calculation unit 456 of the controller 45. The feedback compensation amount is calculated by PID control or the like from a deviation between the target oil pressure Pt and the actual secondary oil pressure Psr (S30).

Next, the required flow rate Q is calculated by the required flow rate calculation unit 452 of the controller 45. The required flow rate Q is calculated on the basis of the current speed ratio Rt, the feedforward compensation amount, and the feedback compensation amount (S40).

Next, the opening amount A of the secondary control valve 43 is calculated by the opening amount calculation unit 453 of the controller 45 on the basis of the required flow rate Q (S50).

Next, the instructed current i issued to the solenoid 434 of the secondary control valve 43 is calculated by the instructed current calculation unit 454 of the controller 45 on the basis of the opening amount A (S60).

Next, the controller 45 issues the calculated instructed current i to the solenoid 434 of the secondary control valve 43 (S70). As a result of this processing, the solenoid 434 of the secondary control valve 43 is operated such that the secondary control valve reaches the opening amount A, whereby the flow rate of the secondary control valve 43 is controlled to the required flow rate Q.

Hence, according to this embodiment, the oil pressure supplied to the hydraulic cylinder 22 of the secondary pulley 16 is controlled by a single control valve, i.e. the secondary control valve 43, alone using the line pressure as a source pressure. When a large oil pressure such as the line pressure is controlled directly, it is typically necessary to increase a capacity of the solenoid in order to operate a mechanical feedback system for circulating the oil pressure to the valve.

In this embodiment, on the other hand, the actual oil pressure detected by the sensor is controlled by internal control performed by the controller 45, and therefore a mechanical feedback system is not required.

When a target oil pressure is set and the solenoid 434 is operated so as to follow the target oil pressure, a responsiveness of the solenoid 434 is low, and an initial value cannot be determined. In this embodiment, on the other hand, the flow rate of the working oil flowing through the control valve is controlled instead of the oil pressure. The flow rate is determined univocally in accordance with the sectional area of the opening portion, and therefore it is merely necessary to set the sectional area and determine an operating amount of the solenoid 434 at which to realize the sectional area.

According to this configuration, the oil pressure supplied to the hydraulic cylinder 22 can be controlled by a single control valve (the secondary control valve 43) without increasing the size of the solenoid 434.

As described above, this embodiment of this invention relates to the hydraulic control apparatus 40 serving as a control apparatus for the continuously variable transmission mechanism 4, wherein the speed ratio of the continuously variable transmission mechanism 4 is modified by modifying the groove width of the primary pulley 15 and the secondary pulley 16 in accordance with the oil pressure supplied to the hydraulic cylinder 21 of the primary pulley 15 and the hydraulic cylinder 22 of the secondary pulley 16 so as to modify a winding radius of the V belt 17.

The hydraulic control apparatus 40 comprises the oil pump 30 functioning as an oil pressure supply unit that supplies the working oil at a predetermined oil pressure (the line pressure), the secondary control valve 43 functioning as a flow rate control unit that controls the flow rate at which the working oil supplied by the oil pump 30 is supplied to the hydraulic cylinder 22, and the controller 45 functioning as flow rate setting part that sets the target oil pressure Pt to be supplied to the hydraulic cylinder 22, and sets the flow rate at which the working oil is to be caused to flow through the secondary control valve 43 in order to achieve the target oil pressure Pt.

In other words, the target oil pressure Pt of the oil pressure supplied to the hydraulic cylinder 22 is set as a flow rate of the working oil that passes through the secondary control valve 43 serving as a flow rate control valve, whereupon the set flow rate is supplied from the secondary control valve 43 to the hydraulic cylinder 22. According to this configuration, the oil pressure can be supplied to the hydraulic cylinder 22 using the line pressure as a source pressure with a single control valve.

When controlling the oil pressure in particular, the spring and the solenoid must be increased in size to perform an oil pressure feedback operation on the large oil pressure constituting the line pressure. According to this embodiment of the invention, on the other hand, the oil pressure supplied to the hydraulic cylinder 22 is controlled by controlling the flow rate of the secondary control valve 43 serving as a flow rate control unit instead of controlling the oil pressure using the line pressure as a source pressure. In so doing, the controller 45 need only control the flow rate of the secondary control valve 43, or in other words the opening sectional area of the valve, and as a result, a reduction in the responsiveness of the oil pressure is prevented without increasing the size of the solenoid.

The secondary oil pressure sensor 46 is provided as an oil pressure detection unit that detects the actual secondary oil pressure Psr supplied to the hydraulic cylinder 22, and the controller 45 is configured to set the flow rate at which the working oil is caused to flow through the secondary control valve 43 on the basis of a difference between the target oil pressure Pt to be supplied to the hydraulic cylinder 22 and the detected actual secondary oil pressure Psr. By performing feedback control using the actual oil pressure through internal control performed by the controller 45 in this manner, a mechanical feedback system can be omitted, and as a result, an increase in the size of the solenoid 434 can be prevented.

The secondary control valve 43 comprises, as an actuator, the solenoid 434 that causes the spool 432 to slide in the axial direction, and the flow rate is controlled by an operation of the solenoid 434. The controller 45 is configured to set the flow rate of the working oil by issuing the instructed current i as a command value for operating the solenoid 434. By controlling the secondary pressure supplied to the hydraulic cylinder 22 through flow rate control rather than oil pressure control in this manner, a control amount is controlled in accordance with the operating amount of the solenoid 434. A mechanical feedback system can therefore be eliminated, and as a result, an increase in the size of the solenoid 434 can be prevented.

The controller 45 comprises the oil pressure flow rate converter 452 functioning as a flow rate determination unit that determines the flow rate at which the working oil is to be caused to flow through the secondary control valve 43 in order to achieve the target oil pressure Pt, the area converter 453 functioning as an area determination unit that determines the opening area of the secondary control valve 43 at which to achieve the determined flow rate, and the current converter 454 functioning as an operating amount determination unit that determines the instructed current i, which serves as the control amount at which to operate the solenoid 434 in order to achieve the determined opening area. According to this configuration, the controller 45 need only control the flow rate of the secondary control valve 43, or in other words the opening sectional area of the valve, and as a result, a reduction in the responsiveness of the oil pressure is prevented without increasing the size of the solenoid.

An embodiment of this invention was described above, but the above embodiment is merely an example of an application of this invention, and the technical scope of this invention is not limited to the specific configurations of the above embodiment.

In this embodiment, the belt type continuously variable transmission mechanism 4 formed by winding the V belt 17 between the pulleys was described as an example, but this invention is not limited thereto, and a continuously variable transmission mechanism formed by winding a chain between the pulleys instead of the V belt 17 may be used instead. Moreover, an auxiliary transmission mechanism having stepped gear positions may be provided in series with the continuously variable transmission mechanism 4.

In this embodiment, an example in which the secondary pressure Psec supplied to the hydraulic cylinder 22 of the secondary pulley 16 in the continuously variable transmission mechanism 4 is subjected to flow rate control by the secondary control valve 43 was described, but this invention is not limited thereto, and a similar operation is performed in the primary pulley 15. This invention may also be applied to another configuration in which an oil pressure is controlled by regulating a pilot pressure using a line pressure as a source pressure and controlling a valve opening using the regulated pilot pressure. For example, this invention may be applied to a hydraulic circuit for controlling the engagement conditions of the forward clutch and the reverse brake of the forward-reverse changeover mechanism 3.

This application claims priority to Japanese Patent Application No. 2013-62509 filed with the Japan Patent Office on March 25, 2013, the entire contents of which are incorporated herein by reference.

## Claims

1. A control apparatus for a continuously variable transmission installed in a vehicle, a speed ratio of the continuously variable transmission being modified by modifying a winding radius of a belt sandwiched between a set of pulleys in accordance with an oil pressure supplied to at least one of a set of hydraulic cylinders provided on the set of pulleys, the control apparatus comprising:
an oil pressure supply unit adapted to supply a working oil at a predetermined oil pressure;
a flow rate control unit adapted to control a flow rate at which the working oil supplied by the oil pressure supply unit is supplied to the hydraulic cylinder; and
flow rate setting means for setting a target oil pressure to be supplied to the hydraulic cylinder, and sets a flow rate at which the working oil is to be caused to flow through the flow rate control unit in order to achieve the target oil pressure.

2. The control apparatus for a continuously variable transmission according to Claim 1, further comprising an actual oil pressure detection unit that detects an actual oil pressure supplied to the hydraulic cylinder,
wherein the flow rate setting means sets the flow rate at which the working oil is caused to flow through the flow rate control unit on the basis of a difference between the target oil pressure to be supplied to the hydraulic cylinder and the detected actual oil pressure.

3. The control apparatus for a continuously variable transmission according to Claim 1 or Claim 2, wherein the flow rate control unit comprises an actuator, the flow rate being controlled by an operation of the actuator, and
the flow rate setting means sets the flow rate at which the working oil is caused to flow through the flow rate control unit by issuing a command to operate the actuator.

4. The control apparatus for a continuously variable transmission according to Claim 3, wherein the flow rate setting means comprises:
a flow rate determination unit adapted to determine the flow rate at which the working oil is to be caused to flow through the flow rate control unit in order to achieve the target oil pressure;
an area determination unit adapted to determine an opening area of the flow rate control unit at which to achieve the flow rate determined by the flow rate determination unit; and
an operating amount determination unit adapted to determine a control amount at which to operate the actuator in order to achieve the opening area determined by the area determination unit, and
the flow rate at which the working oil is caused to flow through the flow rate control unit is set by operating the actuator in accordance with the control amount determined by the operating amount determination unit.

5. A control method for controlling a continuously variable transmission installed in a vehicle, a speed ratio of the continuously variable transmission being modified by modifying a winding radius of a belt sandwiched between a set of pulleys in accordance with an oil pressure supplied to at least one of a set of hydraulic cylinders provided on the set of pulleys, using a control apparatus comprising an oil pressure supply unit that supplies a working oil at a predetermined oil pressure and a flow rate control unit that controls a flow rate at which the working oil supplied by the oil pressure supply unit is supplied to the hydraulic cylinder,
the control method comprising:
setting a target oil pressure to be supplied to the hydraulic cylinder;
setting a flow rate at which the working oil is to be caused to flow through the flow rate control unit in order to achieve the target oil pressure; and
causing the working oil to flow through the flow rate control unit at the set flow rate.
